# FASCICULE DE BREVET EUROPEEN

(11) **EP 3 724 028 B1**
(45) Date de publication et mention de la délivrance du brevet: **20.04.2022**
(21) Numéro de dépôt: 18807087.4
(22) Date de dépôt: 27.11.2018
(51) Int. Cl.: B60Q 1/26, B60Q 1/34, B60Q 1/40, B60Q 1/44, B60Q 11/00

(54) **DISPOSITIF DE SIGNALISATION AVEC ACCELEROMETRE INTEGRE PORTE SUR LE DOS D'UN UTILISATEUR D'UN ENGIN DE LOCOMOTION**
DISPOSITION DER SIGNALISIERUNG MIT EINEM INTEGRIERTEN BESCHLEUNIGUNGSMESSER FÜR DEN EINSATZ EINES MOTORS ZUR FORTBEWEGUNG.
SIGNALLING DEVICE WITH INTEGRATED ACCELEROMETER DOOR ON THE BACK OF A USER OF A LOCOMOTION MACHINE

(30) Priorité: 14.12.2017 FR 1771364
(43) Date de publication de la demande: 21.10.2020
(73) Titulaire: AIT EL HADJ, Mohamed, 06100 Nice (FR)
(72) Inventeur: AIT EL HADJ, Mohamed, 06100 Nice (FR)
(74) Mandataire: Macquet, Christophe
(86) Numéro de dépôt international: PCT/EP2018/082709
(87) Numéro de publication internationale: WO 2019/115222

(56) Documents cités:
- WO-A1-2015/067403
- DE-U1-202006 019 330
- FR-A1- 3 003 214
- US-A1- 2015 158 417
- US-A1- 2017 066 492
- US-A1- 2017 158 118
- US-A1- 2017 257 934
- US-B1- 9 096 174

## Description

La présente invention porte sur un dispositif de signalisation avec accéléromètre intégré porté sur le dos d'un utilisateur d'un engin de locomotion.

L'engin de locomotion peut être un engin de transport terrestre, aérien ou fluvial. Le dispositif de signalisation est destiné notamment mais sans que cela soit limitatif à des cycles ou motocycles et le dispositif de signalisation permet aux utilisateurs d'être mieux vus par les usagers de la route, notamment par les automobilistes, par exemple, pendant les changements de direction ou les freinages.

Les changements de direction et les freinages sont traditionnellement signalisés à l'aide de deux clignotants et d'un feu stop positionnés à l'arrière des motocycles, à une hauteur d'un mètre environ. Une telle disposition des clignotants et du feu stop peut ne pas suffire pour alerter efficacement les autres usagers de la route et, en particulier, les automobilistes. Or, la sécurité de l'utilisateur d'un engin de locomotion dépend de la visibilité qu'en ont les autres usagers se trouvant à proximité de l'engin de locomotion.

Certains dispositifs existent déjà, comme des bandes réfléchissantes ou encore des dossards de couleurs vives, mais ceux-ci ne rendent pas le motocycliste sensiblement plus visible pour autant. En outre, ces dispositifs n'indiquent pas le freinage ni les changements de direction du véhicule.

Les documents FR-A-2 870 505 et US 2017/257934 A1 décrivent des dispositifs de signalisation comprenant, d'une part, un émetteur destiné à être connecté à un circuit de commande d'au moins un feu de signalisation primaire d'un cycle et, d'autre part, un récepteur connecté à au moins un feu de signalisation secondaire, ledit récepteur étant apte à recevoir un signal émis par ledit émetteur de manière à commander l'allumage et/ou l'extinction du feu de signalisation secondaire de façon synchrone avec l'allumage et/ou l'extinction du feu de signalisation primaire.

Dans ces documents, ledit feu de signalisation secondaire est positionné sur un support destiné à être placé amovible au dos d'un utilisateur. Le dispositif peut se porter comme un sac à dos par l'intermédiaire de sangles autour des épaules de l'utilisateur.

Un problème survient quand le dispositif de signalisation est monté en sens inverse sur le dos de l'utilisateur. En prenant l'exemple de deux feux de signalisation sous la forme de deux clignotants, ce qui n'est pas limitatif, le clignotant droit peut alors être à gauche sur le dispositif de signalisation et inversement pour le clignotant gauche. Ceci est très dangereux pour la conduite de l'engin étant donné que l'utilisateur peut ne pas s'apercevoir que ses clignotants sont inversés et que les conducteurs des engins se déplaçant dans l'environnement de l'engin de locomotion dont l'utilisateur porte le dispositif de signalisation sont faussement informés des manœuvres latérales à venir de l'engin de locomotion.

Le problème à la base de la présente invention est, pour un dispositif de signalisation porté par un utilisateur d'un engin de locomotion selon l'état de la technique, de détecter quand le ou les feux de signalisation secondaires d'un déplacement latéral indiquent un déplacement inverse suite à un mauvais positionnement du dispositif de signalisation sur le dos de l'utilisateur.

A cet effet, la présente invention concerne un dispositif de signalisation destiné à être placé de manière amovible au dos d'un utilisateur d'un engin de locomotion, le dos restant visible dans un environnement de l'engin en déplacement, le dispositif comprenant, d'une part, un émetteur destiné à être relié à au moins un feu de signalisation primaire de l'engin indiquant une direction latérale droite ou gauche que prend l'engin en déplacement, et, d'autre part, un récepteur relié à au moins un feu de signalisation secondaire intégré au dispositif de signalisation, ledit récepteur étant apte à recevoir un signal émis par ledit émetteur, le dispositif comprenant des moyens électroniques de traitement du signal et de commande de l'allumage et/ou l'extinction dudit au moins un feu de signalisation secondaire de façon synchrone avec l'allumage et/ou l'extinction dudit au moins un feu de signalisation primaire, caractérisé en ce que les moyens électroniques intègrent un accéléromètre et des moyens d'interprétation des mesures de l'accéléromètre permettant de détecter une variation latérale droite ou gauche de direction de déplacement, les moyens de commande dudit au moins un feu de signalisation secondaire comprenant des moyens de vérification que ledit au moins un feu de signalisation secondaire indique bien la direction latérale droite ou gauche suivie par l'utilisateur et l'engin.

L'effet technique est une détection immédiate d'une inversion de feu de signalisation de changement de direction latérale, avantageusement un feu clignotant comparé au feu de signalisation primaire sur l'engin. Cela peut se produire quand le dispositif est placé à l'envers sur le dos de l'utilisateur, avantageusement le conducteur de l'engin de locomotion, ce qui peut perturber le véhicule suiveur de l'engin de locomotion et être source d'accidents.

En effet, un système de détection du sens d'un feu de signalisation secondaire servant avantageusement de clignotant offre à l'utilisateur la sécurité de toujours effectuer une bonne signalisation de ses déplacements latéraux. En prenant l'exemple non limitatif de clignotants, si l'utilisateur porte le dispositif à l'envers, en ayant inversé par exemple le haut et le bas du dispositif, lorsque l'utilisateur utilise le clignotant droit primaire dans son engin de locomotion, c'est le clignotant gauche en tant que clignotant secondaire sur son dos qui va s'allumer. Grâce à la présence de l'accéléromètre, quand le dispositif est monté tête en bas sur le dos de l'utilisateur et qu'il y a inversion de clignotants, ceci sera automatiquement détecté pour une correction la plus rapide possible.

L'accéléromètre présente un encombrement réduit et n'augmente pas notoirement le poids du dispositif. La détection d'une inversion d'un feu de signalisation secondaire par rapport à un feu de signalisation primaire associé est immédiate et ne demande pas à l'utilisateur de regarder en arrière.

Avantageusement, les moyens électroniques comprennent des moyens d'inversion automatique dudit au moins un feu de signalisation secondaire quand les moyens de vérification déterminent que ledit au moins un feu de signalisation secondaire n'indique pas la direction latérale droite ou gauche suivie par l'engin, afin que ledit au moins un feu de signalisation secondaire indique correctement la direction latérale droite ou gauche suivie par l'utilisateur et l'engin ou les moyens électroniques comprennent des moyens d'information à destination de l'utilisateur que la direction latérale droite ou gauche indiquée par ledit au moins un feu de signalisation secondaire est incorrecte.

Il s'ensuit que la correction d'une inversion peut être immédiate et automatique. Ceci permet à l'engin de locomotion et à son utilisateur de continuer leur déplacement sans arrêt. Une autre possibilité est offerte à l'utilisateur : celle de corriger lui-même cette inversion en s'arrêtant et en remettant correctement le dispositif sur son dos. Ceci est peut-être préférable pour un long déplacement mais n'est pas automatique.

La première solution automatique est préférée mais laisser possible la deuxième solution après avertissement de l'utilisateur peut s'avérer judicieux. Il est possible de combiner les deux solutions en corrigeant automatiquement l'inversion des feux de signalisation secondaire tout en avertissant l'utilisateur de ce problème, principalement pour qu'il sache qu'il a vraisemblablement mal mis le dispositif sur son dos.

Avantageusement, l'émetteur est connecté à un circuit de commande de deux feux clignotants primaires droit et gauche de l'engin et ledit au moins un feu de signalisation secondaire comprend deux feux clignotants secondaires droit et gauche, les moyens de vérification détectant si un feu clignotant secondaire est en fonctionnement ou non selon son alimentation électrique.

Ceci est une forme de réalisation préférée avec deux clignotants comme feux de signalisation primaires et secondaires.

Avantageusement, l'émetteur est aussi connecté à un circuit de commande d'au moins un feu auxiliaire de signalisation primaire de l'engin et le dispositif comprend de plus au moins un feu auxiliaire de signalisation secondaire, lesdits au moins un feu auxiliaire de signalisation primaire et secondaire étant pris unitairement ou en combinaison parmi un feu de stop indiquant un freinage, un feu de position, un feu anti-brouillard ou un feu de détresse.

Un même émetteur peut servir pour divers feux de signalisation indiquant des fonctions différentes. L'actionnement d'un feu de signalisation dans l'engin de locomotion est transmis au dispositif de signalisation.

Avantageusement, l'émetteur présente un détecteur de courant dans le ou chaque circuit de commande associé au ou à un feu de signalisation primaire ou les informations d'allumage d'un feu de signalisation primaire sont transmises par liaison filaire à l'émetteur.

Avantageusement, l'émetteur comporte une batterie dédiée, rechargeable par induction, par micro-câble via une prise USB ou par câble relié à une batterie de l'engin de locomotion, un témoin visuel et/ou sonore présent sur le dispositif informant d'une charge de batterie dédiée faible pour l'émetteur.

Le témoin visuel et/ou sonore aide l'utilisateur à prendre connaissance que l'émission ne se fait pas entre feux de signalisation primaire et secondaire et qu'aucune signalisation n'est visible dans son dos. Le témoin visuel doit être aisément visible de l'utilisateur en se trouvant dans le champ de vision et le témoin sonore nécessite que l'engin de locomotion ne couvre pas son audition.

Avantageusement, ledit au moins un feu de signalisation secondaire est sous la forme d'une lampe ou de diodes électroluminescentes dont une intensité lumineuse est variable selon une luminosité extérieure.

Par temps clair de jour, il est avantageux que l'intensité lumineuse soit diminuée pour ne pas éblouir l'environnement extérieur de l'engin de locomotion, par exemple les engins ou véhicules se déplaçant à proximité de l'engin de locomotion associé au dispositif de signalisation.

Avantageusement, le dispositif comprend des moyens de détection radar d'un autre engin de locomotion à proximité de l'engin de locomotion pour lequel le dispositif est destiné avec estimation d'une distance séparant l'autre engin du dispositif, et quand cette distance est inférieure à une distance prédéterminée de sécurité minimale entre les deux engins et mémorisée dans des moyens de mémorisation prévus dans les moyens électroniques, les moyens de commande dudit au moins un feu de signalisation secondaire allument ledit au moins un feu de signalisation avec une intensité et/ou une périodicité spécifiques reconnaissables pour signaler que la distance prédéterminée de sécurité minimale entre les deux engins n'est pas respectée.

Ceci permet d'augmenter la sécurité et d'informer un autre utilisateur que le conducteur de l'engin de locomotion, ce qui est une fonction auxiliaire du dispositif de signalisation selon la présente invention. Le dispositif de signalisation sert à l'information d'un utilisateur extérieur qu'il se rapproche dangereusement de l'engin de locomotion associé au dispositif de signalisation.

Avantageusement, une coque creuse en deux portions se solidarisant de manière amovible entre elles délimite un espace intérieur fermé logeant de manière étanche ledit au moins un feu signalisation secondaire, les moyens électroniques et au moins une source d'alimentation électrique des moyens électroniques et du récepteur, le dispositif comprenant au moins une sangle ajustable passant par la coque et s'enroulant autour du corps de l'utilisateur en présentant des moyens d'attache rapide par encliquetage.

Une coque loge et protège tous les éléments sensibles du dispositif de signalisation. Cette coque se porte avantageusement comme un sac à dos. La coque pourrait cependant s'insérer dans une veste par une poche ou une enceinte fermée, notamment par fermeture à glissières. En alternative, la coque peut être fixée par banche autocollante ou être fixée par des sangles réglables sur la veste. Cette veste peut être une veste de protection se gonflant en cas d'accident connue sous le nom de Air Bag Vest.

Avantageusement, la coque comporte une première portion de coque formant couvercle et une deuxième portion de coque formant réceptacle des moyens électroniques et de ladite au moins une source d'alimentation électrique, la deuxième portion de coque étant destinée à être en vis-à-vis du dos de l'utilisateur, les première et deuxième portions de coque s'emboîtant l'une dans l'autre avec la première portion de coque présentant une face opposée la plus éloignée de la deuxième portion en position emboîtée des première et deuxième portions de coque avec des zones transparentes en vis-à-vis dudit au moins un feu de signalisation secondaire logé à l'intérieur de la coque, la coque étant munie extérieurement d'au moins deux sangles ajustables destinées à attacher la coque sur le dos de l'utilisateur.

Les feux de signalisation sont protégés en étant insérés à l'intérieur de la coque. Les zones transparentes servent de projecteurs. Il peut y avoir des réflecteurs internes à la coque pour concentrer ou rediriger le faisceau lumineux associé.

Avantageusement, soit la deuxième portion de coque est destinée à reposer contre une portion du dos de l'utilisateur, la deuxième portion de coque ou la coque en entier avec ses première et deuxième portions de coque présentant quatre évidements de passage appairés deux à deux pour un passage d'une portion de sangle d'une desdites au moins deux sangles ajustables, ou soit un support de coque est intercalé entre la deuxième portion et le dos de l'utilisateur, le support de coque présentant une face d'appui destinée à reposer contre une portion du dos de l'utilisateur avec, sur une face du support de coque opposée à la face épousant une portion du dos, des moyens d'attache rapide du type bande adhésive autocollante avec la deuxième portion de coque, le support de coque dépassant de la coque quand la coque est superposée au support de coque par au moins quatre branches, chaque branche présentant un évidement de passage pour une portion de sangle d'une desdites au moins deux sangles ajustables, les branches et leur évidement de passage étant latéralement appairées deux à deux.

Les sangles font office de bretelles de sac à dos et permettent de maintenir la coque contre le dos de l'utilisateur quand les sangles sont ajustées. Il est possible de prévoir des ajustements appropriés selon la morphologie de l'utilisateur et les vêtements que l'utilisateur porte.

Deux modes de réalisation sont ainsi possibles. Dans un premier mode, la coque fait aussi fonction de surface d'appui contre le dos de l'utilisateur. Dans le deuxième mode, une pièce spécifique remplit ce rôle avec une solidarisation amovible entre la coque et cette pièce qui est un support de coque.

Le support de coque présente l'avantage d'offrir une surface d'appui plus grande contre le dos de l'utilisateur et, le cas échéant, de présenter cette surface d'appui conformée au dos de l'utilisateur mais ceci nécessite une pièce supplémentaire dans la conception du dispositif de signalisation ainsi qu'une nouvelle solidarisation entre le support de coque et la coque, ce qui augmente le prix du dispositif de signalisation.

Avantageusement, chaque sangle est ajustée pour être destinée à faire le tour d'une épaule respective de l'utilisateur en passant sous un bras de l'utilisateur, chaque évidement de passage présentant un plot médian s'étendant au milieu et dans la longueur de l'évidement en étant sous forme d'un parallélépipède rectangle présentant une face arrondie longitudinale de moindre largeur, une portion de chaque sangle faisant le tour du plot médian autour de la face arrondie en laissant libre la face longitudinale de moindre largeur opposée pour chacun des deux évidements qui lui sont associés, chaque sangle présentant deux extrémités libres portant respectivement un moyen d'encliquetage mâle ou femelle.

Ceci permet un ajustement facilité de la longueur des sangles et évite à une sangle de glisser pendant le déplacement de l'engin de locomotion.

Avantageusement, chaque sangle présente un tronçon de sangle intermédiaire orienté vers l'autre sangle au niveau des moyens d'encliquetage destinés à se trouver au niveau de la poitrine de l'utilisateur, les deux tronçons de sangle intermédiaire présentant une extrémité libre avec des moyens d'encliquetage complémentaires pour leur solidarisation.

Avantageusement, les moyens électroniques sont sous la forme d'une carte de circuit imprimé et le dispositif présente un ou des systèmes remplissant une ou des fonctions suivantes : une fonction de navigation et de géopositionnement local, une fonction d'interconnexion avec un téléphone portable ayant téléchargé une application adéquate, une fonction de clé électronique verrouillant un démarrage de l'engin de locomotion quand le dispositif de signalisation est éloigné d'une distance prédéterminée de l'engin de locomotion ou le déverrouillant quand plus proche de l'engin de locomotion que la distance prédéterminée.

L'invention concerne enfin un ensemble d'un engin de locomotion et d'un dispositif de signalisation porté sur le dos d'un utilisateur de l'engin de locomotion, caractérisé en ce que le dispositif de signalisation est tel que précédemment décrit, un émetteur du dispositif étant logé dans l'engin de locomotion ou se trouvant à proximité de l'engin de locomotion.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective du dispositif de signalisation selon la présente invention, le dispositif comprenant un émetteur, une coque intégrant l'électronique et un support de coque muni de sangles pour être accroché au dos d'un utilisateur d'un engin de locomotion, ces éléments étant montrés à distance les uns des autres,
- la figure 2 est une représentation schématique d'une vue en éclaté du de la coque du dispositif de signalisation selon la présente invention, l'émetteur et le support de coque étant aussi visibles à cette figure,
- la figure 3 est une représentation schématique d'un émetteur faisant partie du dispositif de signalisation selon la présente invention,
- la figure 4 est une représentation schématique d'une carte de circuit imprimé destinée à être logée dans la coque du dispositif de signalisation selon la présente invention,
- les figures 5 à 7 sont des représentations schématiques en perspective respectives d'un couvercle de coque, d'un réceptacle de coque et du couvercle et du réceptacle emboîtés l'un dans l'autre pour former une coque fermée faisant partie du dispositif de signalisation selon la présente invention,
- la figure 8 est une représentation schématique en perspective d'un support de coque utilisé dans une forme de réalisation du dispositif de signalisation selon la présente invention,
- les figures 9 et 11 sont des représentations schématiques en perspective sous deux différents angles de vue d'une pièce réunissant les deux portions de coque en réalisant un port d'entrée ou de sortie communiquant avec l'intérieur de la coque dans un mode de réalisation du dispositif de signalisation selon la présente invention,
- la figure 10 est une représentation schématique d'une coupe en perspective d'une coque selon une forme de réalisation de la présente invention, la coque présentant des évidements de passage pour une sangle respective servant à attacher le dispositif de signalisation au dos de l'utilisateur de l'engin de locomotion.

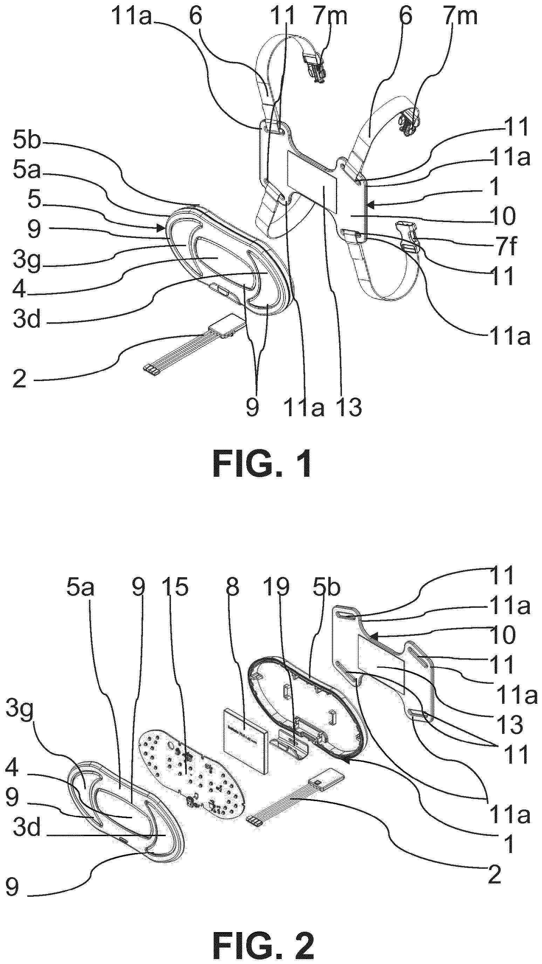

En se référant à toutes les figures et plus particulièrement aux figures 1 et 2, la présente invention concerne un dispositif 1 de signalisation destiné à être placé de manière amovible au dos d'un utilisateur d'un engin de locomotion, le dos restant visible dans un environnement de l'engin en déplacement.

L'engin de locomotion peut être un engin terrestre, marin, ou volant, l'important est que le dos de l'utilisateur, principalement le conducteur. Sans que cela soit limitatif, l'engin terrestre peut être un engin de chantier à pneus ou à chenilles, un motocycle à au moins deux roues, une moto-neige, un transporteur personnel à plate-forme connu sous l'appellation anglo-saxonne de « Stepway ». Pour un engin volant, l'engin peut être une unité autonome volante à moteur connu sous l'appellation anglo-saxonne de « Flyboard Air ». Enfin l'objet peut être un engin flottant comme un jet-ski ou scooter de mer.

Le dispositif 1 comprend un émetteur 2 destiné à être relié à au moins un feu de signalisation primaire de l'engin indiquant une direction latérale droite ou gauche que prend l'engin en déplacement, cet émetteur 2 pouvant être positionné dans l'engin de locomotion.

Le dispositif 1 comprend un récepteur relié à au moins un feu de signalisation secondaire 3d, 3g intégré au dispositif 1 de signalisation, ledit récepteur étant apte à recevoir un signal émis par ledit émetteur 2.

Le dispositif 1 comprend des moyens électroniques de traitement du signal et de commande de l'allumage et/ou l'extinction dudit au moins un feu de signalisation secondaire 3d, 3g de façon synchrone avec l'allumage et/ou l'extinction dudit au moins un feu de signalisation primaire. Le ou les feux de signalisation primaire sont les feux de signalisation classiques de l'engin de locomotion. Ledit au moins un feu de signalisation primaire peut être avantageusement et de manière usuelle sous la forme de deux clignotants mais les deux clignotants peuvent être regroupés dans un même feu de signalisation, ce qui n'est pas préféré mais entre dans le cadre de la présente invention.

Selon l'invention, les moyens électroniques intègrent un accéléromètre et des moyens d'interprétation des mesures de l'accéléromètre permettant de détecter une variation latérale droite ou gauche de direction de déplacement. Les moyens de commande dudit au moins un feu de signalisation secondaire 3d, 3g comprennent des moyens de vérification que ledit au moins un feu de signalisation secondaire 3d, 3g indique bien la direction latérale droite ou gauche suivie par l'utilisateur et l'engin.

Ceci peut ne pas être le cas, quand le dispositif 1 de signalisation est monté en position inversée contre le dos de l'utilisateur, avantageusement quand le haut du dispositif 1 est positionné vers le bas du dos et le bas du dispositif 1 est positionné vers le haut.

L'accéléromètre permet de savoir dans quelle direction l'engin de locomotion se déplace. L'accéléromètre ne détecte pas une position, mais une accélération sur l'un de trois axes orthogonaux. L'accéléromètre mesure les accélérations, mesure les changements de vitesse et les changements de position, notamment les mouvements de translation, ce qui est utilisé présentement pour identifier un déplacement latéral droit ou gauche de l'engin.

L'accéléromètre indique que l'engin de locomotion a dévié vers la droite ou la gauche. Il est alors possible de vérifier si le feu de signalisation secondaire, avantageusement un clignotant droit ou gauche, a correctement indiqué cette déviation, auquel cas le dispositif 1 de signalisation fonctionne correctement. Dans le cas contraire, il est procédé à un réglage ou un repositionnement du dispositif 1 de signalisation sur le dos de l'utilisateur soit automatiquement soit manuellement.

Dans le premier cas automatique, les moyens électroniques peuvent comprendre des moyens d'inversion automatique dudit au moins un feu de signalisation secondaire 3d, 3g quand les moyens de vérification déterminent que ledit au moins un feu de signalisation secondaire 3d, 3g n'indique pas la direction latérale droite ou gauche suivie par l'engin, afin que ledit au moins un feu de signalisation secondaire 3d, 3g indique correctement la direction latérale droite ou gauche suivie par l'utilisateur.

Par exemple s'il a été constaté que c'est le clignotant droit qui s'allume lors d'une déviation vers la gauche, il est possible de corriger cet état de fait et de faire allumer le clignotant gauche pour une déviation vers la gauche et inversement pour l'allumage du clignotant droit pour une déviation vers la droite. L'engin de locomotion n'a pas besoin d'être arrêté et l'utilisateur n'a rien à faire.

Un système d'inversion de sens des clignotants 3d, 3g offre à l'utilisateur la sécurité de toujours envoyer les bons signaux de signalisation. Si l'utilisateur porte le dispositif 1 de signalisation selon la présente invention à l'envers, lorsqu'il va utiliser le clignotant droit, pour la personne qui suit, ce sera le clignotant gauche qui s'allumera. Grâce à la correction effectuée par le système d'inversion, que le dispositif 1 de signalisation selon la présente invention soit porté à l'endroit ou à l'envers, si l'utilisateur se sert du clignotant droit, la personne qui suit verra toujours le clignotant droit.

Ceci permet de corriger l'erreur d'indication de la direction latérale suivie, cette erreur étant dangereuse vis-à-vis des autres engins qui suivaient l'engin de locomotion équipé du dispositif 1 de signalisation selon l'invention. Cette erreur d'indication était due le plus fréquemment à une mise à l'envers du dispositif 1 de signalisation sur le dos de l'utilisateur.

Dans le deuxième cas d'une correction manuelle, l'engin et les moyens électroniques comprennent des moyens d'information à destination de l'utilisateur que la direction latérale droite ou gauche indiquée par ledit au moins un feu de signalisation secondaire 3d, 3g est incorrecte. Ceci peut être fait par un voyant et/ou un signal sonore. L'utilisateur arrête l'engin et repositionne correctement le dispositif 1 de signalisation sur son dos. Ceci prend plus de temps qu'une correction automatique mais assure un positionnement parfait du dispositif 1 de signalisation sur le dos de l'utilisateur.

Le dispositif 1 de signalisation comprend un récepteur, un émetteur 2, au moins un feu de signalisation secondaire 3d, 3g latéral, de préférence deux clignotants 3d, 3g droit et gauche ou un feu de signalisation combinant les fonctions de clignotants 3d, 3g droit et gauche. Il peut aussi comprendre plusieurs autres feux de signalisation secondaire commandés indirectement par des feux de signalisation primaire dans l'engin de locomotion. Le dispositif 1 de signalisation peut comprendre une ou des batteries pour l'alimentation de ses moyens électroniques et du ou des feux de signalisation ainsi que pour l'émetteur 2 et le récepteur.

Dans un mode préférentiel de réalisation de l'invention, l'émetteur 2 peut être connecté à un circuit de commande de deux feux clignotants primaires droit et gauche de l'engin, et ledit au moins un feu de signalisation secondaire 3d, 3g comprend deux feux clignotants 3d, 3g secondaires droit et gauche. Les moyens de vérification détectent alors quand un feu clignotant secondaire est en fonctionnement ou non selon son alimentation électrique.

De plus, l'émetteur 2 peut aussi être connecté à un circuit de commande d'au moins un feu auxiliaire de signalisation primaire de l'engin. Le dispositif 1 de signalisation peut comprendre de plus au moins un feu auxiliaire de signalisation secondaire 4, lesdits au moins un feu auxiliaire de signalisation primaire et secondaire étant pris unitairement ou en combinaison parmi un feu de stop indiquant un freinage, un feu de position, un feu anti-brouillard ou un feu de détresse.

De manière générale, tous les feux de signalisation primaires équipant l'engin de locomotion peuvent être repris sur le dispositif 1 de signalisation porté au dos de l'utilisateur. Tout cela peut se faire en utilisant le même émetteur 2 et le même récepteur qui groupent les appairages des feux de signalisation respectivement primaires et secondaires.

Au centre du dispositif 1 de signalisation peut se trouver un bouton d'appairage avec un ou des indicateurs visuels qui se mettent à clignoter pour signaler que le récepteur est en « Mode Recherche » de l'émetteur 2 embarqué dans l'engin de locomotion. En appuyant sur le frein de l'engin pendant une durée de deux secondes, le feu de signalisation Stop secondaire du dispositif 1 de signalisation selon la présente invention s'allume. L'émetteur 2 et le récepteur sont appairés.

Le dispositif 1 de signalisation selon la présente invention, notamment son récepteur et l'émetteur 2 sont appairés en usine. L'utilisateur appaire l'émetteur et le récepteur, en appuyant sur un bouton situé sous le dispositif d'éclairage près d'un connecteur USB Type C. S'il appuie moins d'une seconde et que l'engin de locomotion est éteint, un mode détresse est activé ou désactivé. S'il appuie entre 2 et 4 secondes, c'est un mode association qui est activé, si on freine ou si on ne freine pas, c'est un mode veille prolongé qui est activé ; si on appuie plus de quatre secondes, c'est un mode démonstration qui est lancé . La fonction de feu antibrouillard peut être assurée par une ou deux diodes électroluminescentes rouges disposées au centre du dispositif 1 de signalisation.

Le feu de signalisation de freinage secondaire, avantageusement à diodes électroluminescentes, peut être utilisé pour faire office de feu de position. Il suffit d'utiliser deux intensités lumineuses différentes, celle du feu de freinage secondaire étant plus haute que celle du feu de position secondaire. Cette fonction peut être activée manuellement ou quand l'intensité lumineuse extérieure est faible, par exemple à la tombée de la nuit, ou lorsque le dispositif 1 de signalisation selon la présente invention est relié à la batterie du véhicule, via le câble à connexion magnétique. Ceci procure une meilleure visibilité des feux de signalisation secondaires.

En cas de freinage d'urgence, les deux clignotants 3d, 3g peuvent s'allumer pour se mettre en mode « détresse » et un signal sonore peut se mettre à biper pour avertir l'utilisateur de l'engin de locomotion. Dès que l'utilisateur actionne de nouveau les clignotants 3d, 3g, le mode « détresse » s'arrête. Ceci procure l'avantage d'une réduction du temps de signalement de l'arrêt d'urgence en cas de danger.

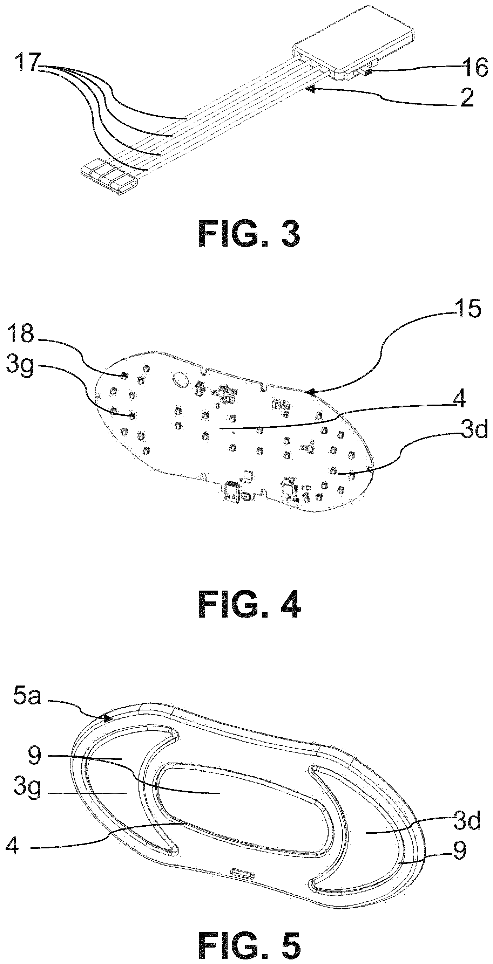

Comme il est visible à la figure 3, un émetteur 2, avantageusement en association avec une batterie ou un accumulateur miniaturisé rechargeable et indépendant de l'émetteur 2, peut être commandé en positions de fonctionnement ou de veille par un bouton poussoir 16 amovible. Le positionnement du bouton poussoir 16 peut être différent de celui montré à la figure 3.

L'émetteur 2 peut être placé dans l'engin de locomotion ou même à distance de l'engin, par exemple dans une poche d'un vêtement de l'utilisateur. La fonction de l'émetteur 2 peut être activée par un téléphone portable doté de l'application appropriée.

L'émetteur 2 peut posséder sa propre source d'énergie par accumulateurs ou batteries rechargeables. L'émetteur 2 peut être rechargé par induction, par câble micro USB ou par câble directement relié à la batterie. Lorsque la ou une ou des batteries de l'émetteur 2, du récepteur ou du dispositif 1 rechargeables sont faibles, le dispositif 1 de signalisation selon la présente invention en est informé par un signal visuel et/ou sonore.

L'émetteur 2 est ainsi 100% étanche. Le dispositif 1 de signalisation selon la présente invention et l'émetteur 2 peuvent se recharger à l'aide d'un système par induction. En le plaçant sur l'embase du système par induction prévue à cet effet, il est effectué un rechargement sans aucune connexion de ces deux éléments.

L'émetteur 2 peut présenter un détecteur de courant dans le ou chaque circuit de commande associé au ou à un feu de signalisation primaire ou les informations d'allumage d'un feu de signalisation primaire sont transmises par liaison filaire à l'émetteur 2. La prise diagnostic ne fournit pas les informations concernant l'allumage du feu stop, du feu de position, du feu antibrouillard, du clignotant droit et du clignotant gauche ainsi que du feu de signalisation de détresse. La connexion entre l'émetteur 2 et le récepteur se faisant par ondes radiofréquence ou WIFI selon un protocole adéquat, par exemple Bluetooth^{®}, ce qui n'est pas limitatif.

Par exemple sans que cela soit limitatif, les détecteurs de courant détectent les signaux actifs de façon à envoyer les informations d'allumage du feu stop et/ou des clignotants au dispositif 1 de signalisation. Ceci procure une connexion rapide et sans adaptation spécifique qui pourrait contrevenir au maintien de la garantie du constructeur.

Comme montré à la figure 3, pour les différents feux de signalisation comme les clignotants 3d, 3g, le feu stop de freinage et les feux de position, l'émetteur 2 peut être doté de quatre détecteurs de courant, un pour chaque signal. L'émetteur 2 est capable de détecter le courant circulant dans un câble du système de signalisation, lorsque celui-ci est alimenté. Lorsque l'utilisateur de l'engin de locomotion appuie sur le frein et/ou utilise les clignotants les feux de signalisation, avantageusement des diodes électroluminescentes, stop et/ou clignotants primaires sont alimentés. L'émetteur 2 le détecte et envoie le signal adéquat au récepteur. En ce qui concerne le feu anti-brouillard. Il est activé à partir d'un bouton en trois positions. En position 1, le feu de position et le feu antibrouillard sont désactivés. En position 2, le feu de position est activé seul. En position 3, le feu de position et le feu antibrouillard sont activés.

Cela permet de supprimer le système de connexion par cosses à prise rapide ou par soudure en évitant de toucher aux câbles d'alimentation du système de signalisation du véhicule. Une telle connexion est rapide et sans outils et ne demande pas d'adaptation spécifique dans l'engin de locomotion qui pourrait annuler la garantie octroyée par le constructeur.

Avantageusement, ledit au moins un feu de signalisation secondaire 3d, 3g est sous la forme d'une lampe ou de diodes électroluminescentes dont une intensité lumineuse est variable selon une luminosité extérieure. Des diodes électroluminescentes sont visibles à la figure 4 sur une carte de circuit imprimé 15 logeant les moyens électroniques et les moyens d'interprétation des mesures de l'accéléromètre.

Il est possible de modifier l'intensité des diodes électroluminescentes en fonction de la luminosité extérieure. Cette fonction a pour but d'adapter la luminosité des diodes électroluminescentes en fonction de la lumière environnante. En plein jour, l'intensité des diodes électroluminescentes est plus puissante de façon à rendre le dispositif 1 de signalisation selon la présente invention visible, même en plein soleil. De nuit, l'intensité des diodes électroluminescentes est réduite, de façon à ne pas éblouir la personne qui suit. Ceci concourt à augmenter la sécurité de conduite en n'éblouissant pas les engins se trouvant à proximité de l'engin de locomotion associé au dispositif 1 de signalisation tout en assurant une meilleure gestion de l'énergie.

Le dispositif 1 de signalisation peut comprendre des moyens de détection radar d'un autre engin de locomotion à proximité de l'engin de locomotion pour lequel le dispositif 1 est destiné avec estimation d'une distance séparant l'autre engin du dispositif 1. Quand cette distance est inférieure à une distance prédéterminée de sécurité minimale entre les deux engins et mémorisée dans des moyens de mémorisation prévus dans les moyens électroniques, les moyens de commande dudit au moins un feu de signalisation secondaire 3d, 3g allument ledit au moins un feu de signalisation avec une intensité et/ou une périodicité spécifiques reconnaissables pour signaler que la distance prédéterminée de sécurité minimale entre les deux engins n'est pas respectée.

La distance prédéterminée dépend de la vitesse de l'engin de locomotion et de l'engin ou des engins suiveurs ainsi de l'environnement terrestre, aérien ou maritime dans lequel se déplacent les engins. Cette fonction ne s'active que si le véhicule roule à plus d'une vitesse prédéterminée aussi dépendant de l'environnement et non à l'arrêt. Dans ce cas, les feux de signalisation secondaires principaux du dispositif 1 de signalisation selon la présente invention, avantageusement au nombre de trois avec le feu stop et les deux clignotants 3d, 3g, peuvent s'allumer et clignoter rapidement, pendant une durée donnée et de manière intense, pour signaler à l'engin suiveur qu'il est trop proche, afin que celui-ci respecte une distance de sécurité suffisante.

Un signal rouge en forme de « I » peut aussi s'allumer et clignoter pour signaler au véhicule suiveur qu'il est trop proche, afin que celui-ci respecte une distance de sécurité suffisante.

Dans tous les cas, l'utilisation d'un tel radar permet de tenir un engin suiveur à une distance sécuritaire de l'engin de locomotion équipé du dispositif 1 de signalisation selon la présente invention.

Il est aussi possible d'équiper le dispositif 1 de signalisation d'une caméra de recul arrière et/ou d'une caméra de recul avant. Ainsi, le dispositif 1 de signalisation selon la présente invention est équipé de deux caméras multidirectionnelles. La caméra de recul peut être positionnée sur la carte de circuit imprimé 15. L'utilisateur de l'engin roulant équipé du dispositif 1 de signalisation peut voir ce qui se passe derrière l'engin. Les images peuvent être retransmises sur un écran dédié ou sur un téléphone portable. La caméra de recul s'active depuis l'écran ou le téléphone portable. La caméra peut être activée pour reculer ou en roulant.

En ce qui concerne la caméra avant, celle-ci peut être positionnée dans un boîtier sur une portion de sangle 6 avant passant sur l'avant du corps de l'utilisateur et servant à maintenir le dispositif 1 de signalisation sur le dos de l'utilisateur, ceci avec ou sans rappel de clignotant.

Dans les deux cas de caméra avant ou arrière, les images peuvent être enregistrées dans la mémoire de l'écran dédié, du téléphone portable ou dans des moyens de mémorisation équipant le dispositif 1 de signalisation en étant incorporés avantageusement dans la carte de circuit imprimé 15 à l'intérieur du dispositif 1. Un logo peut identifier le basculement vers une application « Rappel de signaux et statistiques » regroupant les images mémorisées, dans le cas où une telle application est installée dans l'écran, le téléphone portable ou le dispositif 1. Ainsi, il est possible à l'utilisateur de reculer son engin roulant équipé du dispositif 1 sans tourner la tête en ayant une visibilité arrière en déplacement, ce qui augmente la sécurité de l'engin de locomotion.

En se référant notamment aux figures 1 et 4 à 8, une coque 5 creuse en deux portions 5a, 5b se solidarisant de manière amovible entre elles peut délimiter un espace intérieur fermé logeant de manière étanche ledit au moins un feu de signalisation secondaire, les moyens électroniques et au moins une source d'alimentation électrique 8 des moyens électroniques et du récepteur.

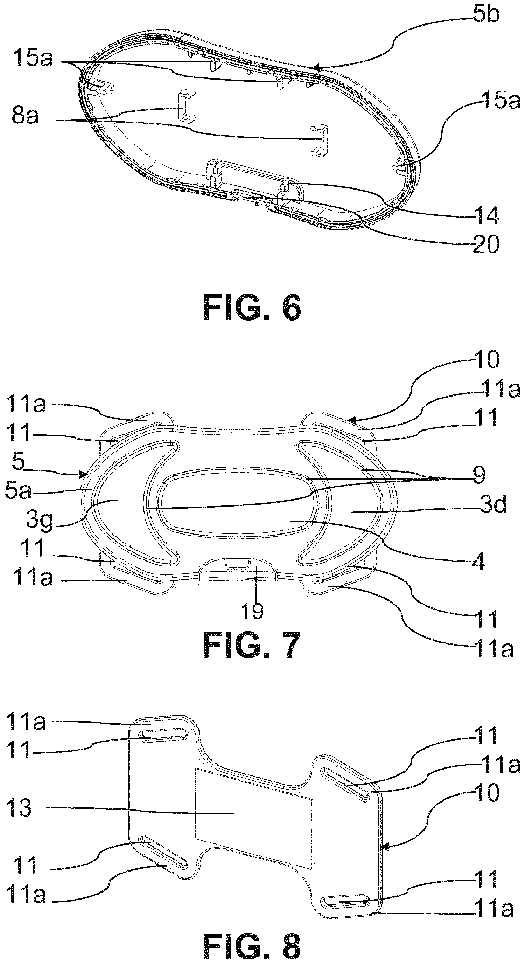

A la figure 4, il est visible une carte de circuit imprimé 15 destinée à être logée dans la coque 5. A la figure 5, il est montré une première portion 5a de coque formant couvercle. A la figure 6, il est montré une deuxième portion 5b de coque formant réceptacle. La figure 7 montre une coque 5 assemblée sur un support 10 de coque destiné à s'appliquer contre le dos de l'utilisateur de l'engin de locomotion et la figure 8 montre le support 10 de coque montré isolément. Pour une meilleure visibilité de l'extérieur, il peut y avoir des bandes réfléchissantes sur le pourtour de la coque 5.

Comme montré à la figure 1, pour sa fixation contre le dos d'un utilisateur, le dispositif 1 de signalisation peut comprendre au moins une sangle 6 ajustable passant par la coque 5 et s'enroulant autour du corps de l'utilisateur en présentant des moyens d'attache rapide 7m, 7f par encliquetage, avantageusement deux sangles 6 s'enroulant autour d'une épaule respective de l'utilisateur. La coque 5 peut donc être munie extérieurement d'au moins deux sangles 6 ajustables destinées à attacher la coque 5 sur le dos de l'utilisateur.

Les sangles 6 peuvent être équipées de diodes électroluminescentes de couleurs jaune ou orange, de façon à rendre visible l'utilisateur, surtout si celui-ci remonte une file de voiture. Les diodes électroluminescentes peuvent être intégrées dans un boîtier, qui vient se fixer sur la sangle, avec un boîtier pour la sangle 6 droite et un boîtier pour la sangle 6 gauche. L'activation des diodes électroluminescentes sur les sangles 6 peut se faire de deux façons. Selon une première façon, l'activation peut se faire sous forme filaire, en les reliant au dispositif 1 de signalisation selon la présente invention. Il est alors nécessaire de prévoir des connexions électriques qui peuvent diminuer l'étanchéité de la coque 5.

Selon une deuxième façon, l'activation peut se faire sans fil avec un émetteur 2 dans le dispositif 1 de signalisation et un récepteur sur une des sangles 6. La présence d'accumulateurs de petite taille sur les sangles 6 est avantageuse. De telles sangles 6 lumineuses rendent visible l'engin de locomotion dans son environnement extérieur, par exemple en le rendant visible pour un engin roulant dans un rétroviseur du véhicule qui précède l'engin de locomotion alors roulant.

En se référant notamment aux figures 5 et 6, la coque 5 peut comporter une première portion 5a de coque formant couvercle et une deuxième portion 5b de coque formant réceptacle des moyens électroniques et de ladite au moins une source d'alimentation électrique 8. C'est la deuxième portion 5b de coque qui est destinée à être en vis-à-vis du dos de l'utilisateur.

Les première 5a et deuxième portions 5b de coque 5 peuvent s'emboîter l'une dans l'autre avec la première portion 5a de coque présentant une face opposée la plus éloignée de la deuxième portion 5b en position emboîtée des première 5a et deuxième portions 5b de coque 5.

Le ou les feux de signalisation sous forme de lampes ou de diodes électroluminescentes sont à l'intérieur de la coque 5. Une seule diode électroluminescente est référencée 18 à la figure 4 mais cette référence est valable pour toutes les diodes électroluminescentes se trouvant sur la carte de circuit imprimé 15.

Comme montré à la figure 4, la première portion 5a de coque formant couvercle peut présenter des zones transparentes 9 en vis-à-vis du ou de chaque feu de signalisation secondaire logé à l'intérieur de la coque 5.

Comme montré à la figure 5, la deuxième portion 5b de coque formant réceptacle peut recevoir les moyens électroniques et la batterie référencé 8 à la figure 2. La deuxième portion 5b de coque peut comprendre des butées 8a délimitant au moins partiellement l'entourage de la batterie ainsi que des ergots 15a de support de la carte de circuit imprimé, la batterie 8 et la carte de circuit imprimé15 n'étant pas visible à la figure 5 mais l'étant à la figure 2.

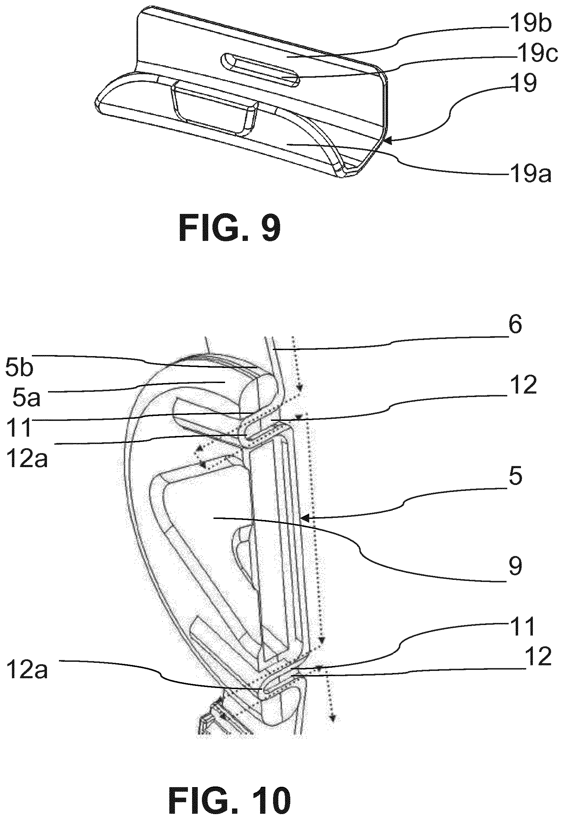

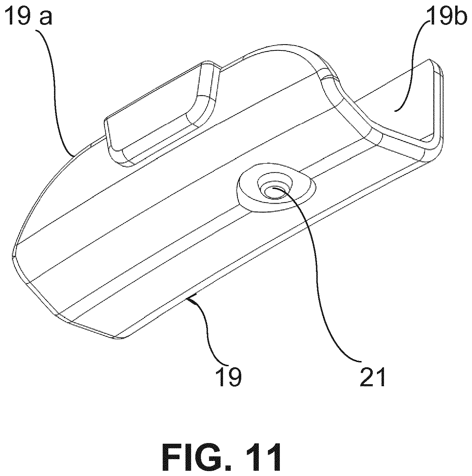

A la figure 5, il est visible un port d'entrée 20 pour une prise électrique par exemple pour le rechargement de la batterie dans la deuxième portion 5b de coque. Un bouchon de protection, visible aux figures 9 et 11 sous la référence 19, entoure ce port d'entrée 20 en réunissant les première et deuxième portions de coque. La deuxième portion 5b de coque comprend un demi-compartiment 14 destiné à être complété par un demi-compartiment porté par la première portion de coque pour former un ensemble semi-fermé et garantir une étanchéité au niveau de ce port d'entrée 20. Grâce à la forme du bouchon de protection on peut utiliser le bouton multifonction.

L'utilisation d'une carte de circuit imprimé 15 souple comme montré à la figure 4 permet de fabriquer une coque 5 flexible, ce qui procure à l'utilisateur une meilleure sensation en portant la coque 5 combiné avec une facilité de rangement.

Les première 5a et deuxième portions 5b de coque 5 peuvent être avantageusement 100% recyclable. Le fait que les première 5a et deuxième portions 5b de coque 5 sont emboîtées l'une dans l'autre procure une facilité de chargement et une étanchéité de la coque 5 100% étanche. Ceci est particulièrement pertinent quand le rechargement de la ou des batteries à l'intérieur de la coque 5 se fait par induction, étant donné que dans ce cas, il n'y a pas besoin de port d'entrée de chargement sur le pourtour de la coque 5.

La coque 5 peut être moulée d'un seul bloc sans ouverture vers l'extérieur, le ou les feux de signalisation secondaires étant placés à l'intérieur de la coque 5. La première portion 5a de coque formant couvercle est injectée en matière transparente, de couleur orange clair, avec l'ajout d'un masque 5c sur les zones devant laisser apparaître les feux de signalisation secondaires. La deuxième portion 5b de coque formant réceptacle peut être injectée en matière opaque et de différentes couleurs. Il n'y a donc pas besoin de coller des fenêtres pour laisser sortir de la coque 5 les faisceaux lumineux des feux de signalisation secondaires, d'où une meilleure étanchéité garantie. La coque 5 est moulée avec un moule relativement simple de conception.

Les zones transparentes 9 de passage des faisceaux lumineux du ou des feux de signalisation sont bombées pour que les faisceaux lumineux soient toujours visibles, quel que soit l'angle d'inclinaison du pilote, qu'il soit en position plus ou moins droite ou couchée sur l'engin de locomotion. Cela rend visible les signaux lumineux même si le dispositif 1 de signalisation selon la présente invention est à 90°.

Dans une première forme de réalisation de la fixation de coque 5 sur le dos de l'utilisateur, la deuxième portion 5b de coque est destinée à reposer contre une portion du dos de l'utilisateur. Dans ce cas, la deuxième portion 5b de coque ou même la coque 5 en entier avec ses première 5a et deuxième portions 5b de coque peut présenter quatre évidements 11 de passage appairés deux à deux pour un passage d'une portion de sangle 6 d'une desdites au moins deux sangles 6 ajustables. Ceci est montré en partie à la figure 10.

Dans une deuxième forme de réalisation montrée notamment aux figures 7 et 8, un support 10 de coque est intercalé entre la deuxième portion et le dos de l'utilisateur. Le support 10 de coque peut présenter une face d'appui destinée à reposer contre une portion du dos de l'utilisateur. Dans cette deuxième forme de réalisation, sur une face du support 10 de coque opposée à la face épousant une portion du dos, des moyens d'attache rapide 13 du type bande adhésive autocollante sont prévus sur des portions en vis-à-vis du support 10 de coque et de la deuxième portion 5b de coque.

Comme il est visible à la figure 7, le support 10 de coque peut dépasser de la coque 5 quand la coque 5 est superposée au support 10 de coque par au moins quatre branches 11a, chaque branche présentant un évidement 11 de passage pour une portion de sangle 6 d'une desdites au moins deux sangles 6 ajustables, les branches 11a et leur évidement 11 de passage étant latéralement appairées deux à deux.

Aux figures 9 et 11, il est montré une pièce 19 recevant en son intérieur une partie des première et deuxième portions de coque. Cette pièce 19 peut servir à renforcer le maintien des première et deuxième portions de coque l'une par rapport à l'autre mais aussi à former une entrée étanche pour un port de communication.

Le bouchon de protection 19 présente une section en forme de U avec une première branche 19a du U appliquée contre une partie de la première portion de coque et une deuxième branche 19b du U appliquée contre une partie de la deuxième portion de coque, le fond du U s'appliquant contre la tranche de la coque. Le bouchon de protection 19 comprend aussi un passage pouvant permettre une connexion avec les moyens électroniques intégrés dans la deuxième portion de coque formant réceptacle. Le bouchon de protection 19 permet aussi d'utiliser le bouton poussoir multifonctions. A la figure 11, il est montré une entrée 21 dans la coque par ce bouchon de protection 19, entrée 21 qui peut être fermée.

En se référant notamment à la figure 1 bien que l'utilisateur ne soit pas montré à cette figure, chaque sangle 6 peut être ajustée pour être destinée à faire le tour d'une épaule respective de l'utilisateur en passant sous un bras de l'utilisateur.

La figure 10 montre une deuxième portion de coque 5b portant les évidements, donc pas de support de coque intercalé entre la deuxième portion de coque et le dos de l'utilisateur. Ce qui va être énoncé est cependant valable pour la forme de réalisation montrant un support de coque.

Pour les deux formes de réalisation avec ou sans support 10 de coque, chaque évidement 11 de passage, soit sur la deuxième coque 5 ou soit sur le support 10 de coque, peut présenter un plot médian 12. Le plot médian 12 peut s'étendre au milieu et dans la longueur de l'évidement 11 en étant sous forme d'un parallélépipède rectangle présentant une face arrondie 12a longitudinale de moindre largeur.

Une portion de chaque sangle 6 peut faire le tour du plot médian 12 autour de la face arrondie 12a en laissant libre la face longitudinale de moindre largeur opposée pour chacun des deux évidements 11 qui lui sont associés, chaque sangle 6 présentant deux extrémités libres portant respectivement un moyen d'encliquetage mâle ou femelle.

En se référant plus particulièrement à la figure 1, chaque sangle 6 peut présenter un tronçon de sangle 6 intermédiaire orienté vers l'autre sangle 6 au niveau des moyens d'encliquetage destinés à se trouver au niveau de la poitrine de l'utilisateur. Les deux tronçons de sangle 6 intermédiaire peuvent présenter une extrémité libre avec des moyens d'encliquetage complémentaires mâle et respectivement femelle pour leur solidarisation.

Il est à noter que le dispositif 1 de signalisation peut aussi être intégré dans une veste au dos de l'utilisateur, par exemple dans une poche fermée et transparente, par bande autocollante ou fixée par deux sangles 6 réglables sur la veste AirBag. La veste peut être une veste gonflable en cas d'accident, aussi dénommé veste de protection par déclencheur de coussin d'air aussi connue sous l'appellation anglo-saxonne de Air-Bag Vest.

Le dispositif 1 de signalisation selon l'invention, notamment dans ses moyens électroniques sous la forme d'une carte de circuit imprimé 15, peut incorporer un ou des systèmes remplissant une ou des fonctions suivantes : une fonction de navigation et de géopositionnement local, une fonction d'interconnexion avec un téléphone portable ayant téléchargé une application adéquate, une fonction de clé électronique verrouillant un démarrage de l'engin de locomotion quand le dispositif 1 de signalisation est éloigné d'une distance prédéterminée de l'engin de locomotion ou le déverrouillant quand plus proche de l'engin de locomotion que la distance prédéterminée.

Un appairage du type Bluetooth^{®} ou par câble peut connecter le dispositif 1 de signalisation selon l'invention à un téléphone portable, à une tablette ou à un ordinateur portable ou non. Ceci permet se fait par l'émetteur 2 du dispositif 1 pour l'enregistrement d'informations telles que par exemple le nom et prénom de l'utilisateur, sa date de naissance, son groupe sanguin, sa photo, sa date d'obtention du permis, le cas échéant, l'immatriculation de l'engin de locomotion, son numéro de série, des photos de l'engin, son carnet d'entretien.

L'application permet d'appairer, d'une part, l'émetteur 2, relié à l'engin de locomotion et le dispositif 1 de signalisation selon la présente invention, porté par l'utilisateur avec, d'autre part, un téléphone portable. Par exemple, l'utilisateur peut créer son profil sur cette application. Avant de se déplacer, il peut définir son trajet. Une fois le trajet validé, les personnes qui se connectent et qui ont accès à son profil, peuvent suivre son trajet en direct. Une fois arrivé à destination, l'utilisateur le signale sur l'application. En cas de chute ou de disparition, l'utilisateur peut être joint, et s'il ne répond pas, il peut être géolocalisé du fait de son système de navigation pour que les secours interviennent au plus vite. Même si le téléphone portable n'a plus de batterie, l'utilisateur est toujours suivi en temps réel.

Grâce à cette fonction, l'utilisateur porteur du dispositif 1 de signalisation peut visualiser des données et les signaux activés du dispositif 1 de signalisation sur l'écran du téléphone portable. L'application dans le téléphone portable récolte et fournit des données statistiques. Ceci permet une meilleure gestion de l'énergie et une meilleure visibilité des données mémorisées.

De plus, l'émetteur 2 peut être relié au système de démarrage de l'engin de locomotion. Le dispositif 1 de signalisation selon la présente invention doit être à une distance maximale de deux mètres de l'émetteur 2 pour procéder au démarrage de l'engin. Si le dispositif 1 de signalisation selon la présente invention est à plus de 2 mètres de l'émetteur 2, l'engin peut s'arrêter instantanément et une alarme peut se déclencher.

Cette fonction s'apparente à la fonction de clé électronique ou de kit main libre pour l'ouverture et le démarrage d'un véhicule automobile. Ceci assure une protection contre le vol.

En cas de chute ou d'accident, le dispositif 1 de signalisation selon la présente invention peut déclencher un signal sonore spécifique afin d'alerter des personnes situées à bonne distance de l'accident. Si la chute ou l'accident se produit dans un lieu désert, cela va permettre aux intervenants de trouver l'utilisateur porteur du dispositif 1 plus rapidement. Ceci vaut par exemple dans une avalanche pour une moto-neige. Le pilote a la possibilité d'arrêter le son manuellement. S'il est inconscient, le dispositif 1 de signalisation selon la présente invention envoie un signal d'urgence aux secours. L'envoi du signal d'urgence aux secours, peut aussi se faire manuellement par le pilote.

Il est possible de dédier une deuxième batterie uniquement à cette fonction, ou d'utiliser un câble à connexion magnétique pour se connecter à la batterie de l'engin de locomotion. Il est ainsi obtenu un gain de temps pour la localisation du pilote.

Grâce à la puce du système de navigation et de géopositionnement local avantageusement intégrée dans l'émetteur 2, en cas de vol, le véhicule peut être retrouvé où qu'il se trouve.

L'invention concerne enfin un ensemble d'un engin de locomotion et d'un dispositif 1 de signalisation porté sur le dos d'un utilisateur de l'engin de locomotion, caractérisé en ce que le dispositif 1 de signalisation est tel que précédemment décrit, un émetteur 2 du dispositif 1 étant logé dans l'engin de locomotion ou se trouvant à proximité de l'engin de locomotion.

## Revendications

1. Dispositif (1) de signalisation destiné à être placé de manière amovible au dos d'un utilisateur d'un engin de locomotion, le dos restant visible dans un environnement de l'engin en déplacement, le dispositif (1) comprenant, d'une part, un émetteur (2) destiné à être relié à au moins un feu de signalisation primaire de l'engin indiquant une direction latérale droite ou gauche que prend l'engin en déplacement et, d'autre part, un récepteur relié à au moins un feu de signalisation secondaire (3d, 3g) intégré au dispositif (1) de signalisation, ledit récepteur étant apte à recevoir un signal émis par ledit émetteur (2), le dispositif (1) comprenant des moyens électroniques de traitement du signal et de commande de l'allumage et/ou l'extinction dudit au moins un feu de signalisation secondaire (3d, 3g) de façon synchrone avec l'allumage et/ou l'extinction dudit au moins un feu de signalisation primaire, les moyens électroniques intégrant un accéléromètre et des moyens d'interprétation des mesures de l'accéléromètre permettant de détecter une variation latérale droite ou gauche de direction de déplacement, **caractérisé en ce que** les moyens de commande dudit au moins un feu de signalisation secondaire (3d, 3g) comprennent des moyens de vérification que ledit au moins un feu de signalisation secondaire (3d, 3g) indique bien la direction latérale droite ou gauche suivie par l'utilisateur et l'engin.

2. Dispositif (1) selon la revendication 1, dans lequel, les moyens électroniques comprennent des moyens d'inversion automatique dudit au moins un feu de signalisation secondaire (3d, 3g) quand les moyens de vérification déterminent que ledit au moins un feu de signalisation secondaire (3d, 3g) n'indique pas la direction latérale droite ou gauche suivie par l'engin, afin que ledit au moins un feu de signalisation secondaire (3d, 3g) indique correctement la direction latérale droite ou gauche suivie par l'utilisateur et l'engin ou les moyens électroniques comprennent des moyens d'information à destination de l'utilisateur que la direction latérale droite ou gauche indiquée par ledit au moins un feu de signalisation secondaire (3d, 3g) est incorrecte.

3. Dispositif (1) selon la revendication 1 ou 2, dans lequel l'émetteur (2) est connecté à un circuit de commande de deux feux clignotants primaires droit et gauche de l'engin, et ledit au moins un feu de signalisation secondaire (3d, 3g) comprend deux feux clignotants (3d, 3g) secondaires droit et gauche, les moyens de vérification détectant si un feu clignotant secondaire (3d, 3g) est en fonctionnement ou non selon son alimentation électrique.

4. Dispositif (1) selon la revendication précédente, dans lequel l'émetteur (2) est aussi connecté à un circuit de commande d'au moins un feu auxiliaire de signalisation primaire de l'engin et le dispositif (1) comprend de plus au moins un feu auxiliaire de signalisation secondaire (4), lesdits au moins un feu auxiliaire de signalisation primaire et secondaire (4) étant pris unitairement ou en combinaison parmi un feu de stop indiquant un freinage, un feu de position, un feu anti-brouillard ou un feu de détresse.

5. Dispositif (1) selon l'une quelconque des deux revendications précédentes, dans lequel l'émetteur (2) présente un détecteur de courant dans le ou chaque circuit de commande associé au ou à un feu de signalisation primaire ou les informations d'allumage d'un feu de signalisation primaire sont transmises par liaison filaire à l'émetteur (2).

6. Dispositif (1) selon la revendication précédente, dans lequel l'émetteur (2) comporte une batterie dédiée, rechargeable par induction, par micro-câble via une prise USB ou par câble relié à une batterie de l'engin de locomotion, un témoin visuel et/ou sonore présent sur le dispositif (1) informant d'une charge de batterie dédiée faible pour l'émetteur (2).

7. Dispositif (1) selon l'une quelconque des revendications précédentes, dans lequel ledit au moins un feu de signalisation secondaire (3d, 3g) est sous la forme d'une lampe ou de diodes électroluminescentes (18) dont une intensité lumineuse est variable selon une luminosité extérieure.

8. Dispositif (1) selon la revendication précédente, lequel comprend des moyens de détection radar d'un autre engin de locomotion à proximité de l'engin de locomotion pour lequel le dispositif (1) est destiné avec estimation d'une distance séparant l'autre engin du dispositif (1) et quand cette distance est inférieure à une distance prédéterminée de sécurité minimale entre les deux engins et mémorisée dans des moyens de mémorisation prévus dans les moyens électroniques, les moyens de commande dudit au moins un feu de signalisation secondaire (3d, 3g) allument ledit au moins un feu de signalisation avec une intensité et/ou une périodicité spécifiques reconnaissables pour signaler que la distance prédéterminée de sécurité minimale entre les deux engins n'est pas respectée.

9. Dispositif (1) selon l'une quelconque des revendications précédentes, dans lequel une coque (5) creuse en deux portions (5a, 5b) se solidarisant de manière amovible entre elles délimite un espace intérieur fermé logeant de manière étanche ledit au moins un feu signalisation secondaire (3d, 3g), les moyens électroniques et au moins une source d'alimentation électrique (8) des moyens électroniques et du récepteur, le dispositif (1) comprenant au moins une sangle (6) ajustable passant par la coque (5) et s'enroulant autour du corps de l'utilisateur en présentant des moyens d'attache rapide (7m, 7f) par encliquetage.

10. Dispositif (1) selon la revendication précédente, dans lequel la coque (5) comporte une première portion (5a) de coque formant couvercle et une deuxième portion (5b) de coque formant réceptacle des moyens électroniques et de ladite au moins une source d'alimentation électrique (8), la deuxième portion (5b) de coque étant destinée à être en vis-à-vis du dos de l'utilisateur, les première (5a) et deuxième portions (5b) de coque (5) s'emboîtant l'une dans l'autre avec la première portion (5a) de coque présentant une face opposée la plus éloignée de la deuxième portion (5b) en position emboîtée des première (5a) et deuxième portions (5b) de coque (5) avec des zones transparentes (9) en vis-à-vis dudit au moins un feu de signalisation secondaire (3d, 3g) logé à l'intérieur de la coque (5), la coque (5) étant munie extérieurement d'au moins deux sangles (6) ajustables destinées à attacher la coque (5) sur le dos de l'utilisateur.

11. Dispositif (1) selon la revendication 10, dans lequel soit la deuxième portion (5b) de coque est destinée à reposer contre une portion du dos de l'utilisateur, la deuxième portion (5b) de coque ou la coque (5) en entier avec ses première (5a) et deuxième portions (5b) de coque présentant quatre évidements (11) de passage appairés deux à deux pour un passage d'une portion de sangle (6) d'une desdites au moins deux sangles (6) ajustables, ou soit un support (10) de coque est intercalé entre la deuxième portion (5b) et le dos de l'utilisateur, le support (10) de coque présentant une face d'appui destinée à reposer contre une portion du dos de l'utilisateur avec, sur une face du support (10) de coque opposée à la face épousant une portion du dos, des moyens d'attache rapide (13) du type bande adhésive autocollante avec la deuxième portion (5b) de coque, le support (10) de coque dépassant de la coque (5) quand la coque (5) est superposée au support (10) de coque par au moins quatre branches (11a), chaque branche (11a) présentant un évidement (11) de passage pour une portion de sangle (6) d'une desdites au moins deux sangles (6) ajustables, les branches (11a) et leur évidement (11) de passage étant latéralement appairées deux à deux.

12. Dispositif (1) selon la revendication précédente, dans lequel chaque sangle (6) est ajustée pour être destinée à faire le tour d'une épaule respective de l'utilisateur en passant sous un bras de l'utilisateur, chaque évidement (11) de passage présentant un plot médian (12) s'étendant au milieu et dans la longueur de l'évidement (11) en étant sous forme d'un parallélépipède rectangle présentant une face arrondie (12a) longitudinale de moindre largeur, une portion de chaque sangle (6) faisant le tour du plot médian (12) autour de la face arrondie (12a) en laissant libre la face longitudinale de moindre largeur opposée pour chacun des deux évidements (11) qui lui sont associés, chaque sangle (6) présentant deux extrémités libres portant respectivement un moyen d'encliquetage mâle (7m) ou femelle (7f).

13. Dispositif (1) selon la revendication précédente, dans lequel, chaque sangle (6) présente un tronçon de sangle intermédiaire orienté vers l'autre sangle (6) au niveau des moyens d'encliquetage (7m, 7f) destinés à se trouver au niveau de la poitrine de l'utilisateur, les deux tronçons de sangle intermédiaire présentant une extrémité libre avec des moyens d'encliquetage complémentaires pour leur solidarisation.

14. Dispositif (1) selon l'une quelconque des revendications précédentes, dans lequel les moyens électroniques sont sous la forme d'une carte de circuit imprimé (15), le dispositif (1) présentant un ou des systèmes remplissant une ou des fonctions suivantes : une fonction de navigation et de géopositionnement local, une fonction d'interconnexion avec un téléphone portable ayant téléchargé une application adéquate, une fonction de clé électronique verrouillant un démarrage de l'engin de locomotion quand le dispositif (1) de signalisation est éloigné d'une distance prédéterminée de l'engin de locomotion ou le déverrouillant quand plus proche de l'engin de locomotion que la distance prédéterminée.

15. Ensemble d'un engin de locomotion et d'un dispositif (1) de signalisation porté sur le dos d'un utilisateur de l'engin de locomotion, **caractérisé en ce que** le dispositif (1) de signalisation est selon l'une quelconque des revendications précédentes, un émetteur (2) du dispositif (1) étant logé dans l'engin de locomotion ou se trouvant à proximité de l'engin de locomotion.

## Patentansprüche

1. Signalisierungsvorrichtung (1), die dazu bestimmt ist, in abnehmbarer Form auf dem Rücken eines Benutzers einer Fortbewegungsmaschine platziert zu werden, wobei der Rücken in einer Umgebung der fahrenden Maschine sichtbar bleibt, wobei die Vorrichtung (1) einerseits einen Sender (2), der dazu bestimmt ist, mit mindestens einer Primär-Signalisierungsleuchte der Maschine verbunden zu werden, der eine rechte oder linke Seitenrichtung, die die fahrende Maschine nimmt, und andererseits einen Empfänger umfasst, der mit mindestens einer Sekundär-Signalisierungsleuchte (3d, 3g) verbunden ist, die in der Signalisierungsvorrichtung (1) integriert ist, wobei der Empfänger imstande ist, ein Signal zu empfangen, das von dem Sender (2) gesendet wird, wobei die Vorrichtung (1) elektronische Mittel zur Verarbeitung des Signals und zur Steuerung des Einschaltens und/oder des Ausschaltens der mindestens einen Sekundär-Signalisierungsleuchte (3d, 3g) in synchroner Form mit dem Einschalten und/oder des Ausschalten der mindestens einen Primär-Signalisierungsleuchte umfasst, wobei die elektronischen Mittel einen Beschleunigungsmesser und Mittel zum Interpretieren der Messungen des Beschleunigungsmessers einbezieht, die es ermöglichen, eine rechte oder linke Seitenänderung einer Bewegung zu erkennen, **dadurch gekennzeichnet, dass** die Mittel zum Steuern der mindestens einen Sekundär-Signalisierungsleuchte (3d, 3g) Mittel zum Überprüfen umfassen, ob die mindestens eine Sekundär-Signalisierungsleuchte (3d, 3g) auch die rechte oder linke Seitenrichtung anzeigt, die durch den Benutzer der Maschine verfolgt wird.

2. Vorrichtung (1) nach Anspruch 1, wobei die elektronischen Mittel automatische Umkehrmittel der mindestens einen Sekundär-Signalisierungsleuchte (3d, 3g) umfassen, wenn die Mittel zum Überprüfen bestimmen, dass die mindestens eine Sekundär-Signalisierungsleuchte (3d, 3g) die rechte oder linke Seitenrichtung, die von der Maschine verfolgt wird, nicht anzeigt, damit die mindestens eine Sekundär-Signalisierungsleuchte (3d, 3g) die rechte oder linke Seitenrichtung, die durch den Benutzer und die Maschine verfolgt wird, korrekt anzeigt, oder die elektronischen Mittel Informationsmittel für den Benutzer umfassen, dass die rechte oder linke Seitenrichtung, die von der mindestens einen Sekundär-Signalisierungsleuchte (3d, 3g) angezeigt wird, nicht korrekt ist.

3. Vorrichtung (1) nach Anspruch 1 oder 2, wobei der Sender (2) mit einer Steuerschaltung zweier Primär-Blinkleuchten, rechts und links, der Maschine verbunden ist, und die mindestens eine Sekundär-Signalisierungsleuchte (3d, 3g) zwei Sekundär-Blinkleuchten (3d, 3g), rechts und links, umfasst, wobei die Mittel zum Überprüfen je nach deren Stromversorgung erkennen, ob eine Sekundär-Blinkleuchte (3d, 3g) in Betrieb ist oder nicht.

4. Vorrichtung (1) nach dem vorstehenden Anspruch, wobei der Sender (2) auch mit einer Steuerschaltung mindestens einer Primär-Hilfssignalisierungsleuchte der Maschine verbunden ist, und die Vorrichtung (1) weiter mindestens eine Sekundär-Hilfssignalisierungsleuchte (4) umfasst, wobei die mindestens eine Primär- und Sekundär-Hilfssignalisierungsleuchte (4) einzeln oder in Verbindung aus einer Bremsleuchte, die eine Bremsung anzeigt, einer Positionsleuchte, einer Nebelschlussleuchte oder einer Warnleuchte übernommen werden.

5. Vorrichtung (1) nach einem der beiden vorstehenden Ansprüche, wobei der Sender (2) einen Stromdetektor in der oder jeder Steuerschaltung, die der oder einer Primär-Signalisierungsleuchte zugeordnet sind, aufweist, oder die Informationen zum Einschalten einer Primär-Signalisierungsleuchte durch Drahtverbindung an den Sender (2) übertragen werden.

6. Vorrichtung (1) nach dem vorstehenden Anspruch, wobei der Sender (2) eine zweckgebundene, durch Induktion, durch Mikrokabel über einen USB-Stecker, oder ein Kabel aufladbare Batterie beinhaltet, das mit einer Batterie der Fortbewegungsmaschine verbunden ist, eine auf der Vorrichtung (1) vorhandene optische und/oder akustische Anzeige, die über eine schwache Ladung einer zweckgebundenen Batterie für den Sender (2) informiert.

7. Vorrichtung (1) nach einem der vorstehenden Ansprüche, wobei die mindestens eine Sekundär-Signalisierungsleuchte (3d, 3g) in Form einer Lampe oder von elektrolumineszierenden Dioden (18) ist, von denen eine Leuchtstärke je nach Außenhelligkeit variabel ist.

8. Vorrichtung (1) nach dem vorstehenden Anspruch, welche Radar-Erkennungsmittel für eine andere Fortbewegungsmaschine in der Nähe der Fortbewegungsmaschine, für die die Vorrichtung (1) bestimmt ist, mit Schätzung eines Abstandes, der die andere Maschine von der Vorrichtung (1) trennt, und wenn dieser Abstand geringer als ein vorbestimmter, und in den Speichermitteln gespeicherter Mindestsicherheitsabstand zwischen den beiden Maschinen ist, die in den elektronischen Mitteln vorgesehen sind, die Steuermittel der mindestens einen Sekundär-Signalisierungsleuchte (3d, 3g) die mindestens eine Signalisierungsleuchte mit einer wiedererkennbaren speziellen Stärke und/oder Häufigkeit einschalten, um zu signalisieren, dass der vorbestimmte Mindestsicherheitsabstand zwischen den beiden Maschinen nicht eingehalten ist.

9. Vorrichtung (1) nach einem der vorstehenden Ansprüche, wobei eine hohle Schale (5) in zwei Abschnitten (5a, 5b), die lösbar miteinander verbunden sind, einen geschlossenen Innenraum begrenzt, der in dichter Form die mindestens eine Sekundär-Signalisierungsleuchte (3d, 3g), die elektronischen Mittel und mindestens eine Stromversorgungsquelle (8) der elektronischen Mittel und des Empfängers aufnimmt, wobei die Vorrichtung (1) mindestens einen einstellbaren Gurt (6) umfasst, der über die Schale (5) verläuft, und sich um den Körper des Benutzers herum aufrollt, und dabei Schnellbefestigungsmittel (7m, 7f) durch Einklinken aufweist.

10. Vorrichtung (1) nach dem vorstehenden Anspruch, wobei die Schale (5) einen ersten Schalenabschnitt (5a), der einen Deckel bildet, und einen zweiten Schalenabschnitt (5b) beinhaltet, der ein Behältnis für die elektronischen Mittel und die mindesten eine Stromversorgungsquelle (8) bildet, wobei der zweite Schalenabschnitt (5b) dazu bestimmt ist, gegenüber dem Rücken des Benutzers zu liegen, wobei der erste (5a) und der zweite Abschnitt (5b) der Schale (5) ineinander einrasten, wobei der erste Schalenabschnitt (5a) eine zum zweiten Abschnitt (5b) am weitesten entfernt gelegene, gegenüberliegende Seite in eingerasteter Position der ersten (5a) und zweiten Abschnitte (5b) der Schale (5) mit transparenten Zonen (9) gegenüber der mindestens einen Sekundär-Signalisierungsleuchte (3d, 3g) aufweist, die im Inneren der Schale (5) aufgenommen ist, wobei die Schale (5) außen mit mindestens zwei einstellbaren Gurten (6) versehen ist, die dazu bestimmt sind, die Schale (5) am Rücken des Benutzers zu befestigen.

11. Vorrichtung (1) nach Anspruch 10, wobei entweder der zweite Schalenabschnitt (5b) dazu bestimmt ist, an einem Abschnitt des Rückens des Benutzers anzuliegen, der zweite Schalenabschnitt (5b) oder die Schale (5) als Ganze mit ihrem ersten (5a) und zweiten Schalenabschnitt (5b) vier paarweise angelegte Durchgangsaussparungen (11) für einen Durchgang eines Gurtabschnitts (6) eines der mindestens zwei einstellbaren Gurte (6) aufweist, oder entweder eine Schalenhalterung (10) zwischen dem zweiten Abschnitt (5b) und dem Rücken des Benutzers eingeschoben ist, wobei die Schalenhalterung (10) eine Anlagefläche aufweist, die dazu bestimmt ist, an einem Abschnitt des Rückens des Benutzers anzuliegen, mit, auf einer Fläche der Schalenhalterung gegenüber der Fläche, die sich an einen Abschnitt des Rückens anschmiegt, Schnellbefestigungsmitteln (13) in der Art eines selbstklebenden Haftbandes mit dem zweiten Schalenabschnitt (5b), wobei die Schalenhalterung (10) aus der Schale (5), wenn die Schale (5) über der Schalenhalterung (10) liegt durch mindestens vier Schenkel (11a) herausragt, wobei jeder Schenkel (11a) eine Durchgangsaussparung (11) für einen Gurtabschnitt (6) eines der mindestens zwei einstellbaren Gurte (6) aufweist, wobei die Schenkel (11a) und deren Durchgangsaussparung (11) seitlich paarweise angelegt sind.

12. Vorrichtung (1) nach dem vorstehenden Anspruch, wobei jeder Gurt (6) angepasst ist, um dazu bestimmt zu sein, um eine jeweilige Schulter des Benutzers herumzuführen, und dabei unter dem Arm des Benutzers zu verlaufen, wobei jede Durchgangsaussparung (11) einen Mittelstift (12) aufweist, der sich in der Mitte und in der Länge der Aussparung (11) erstreckt, und dabei in Form eines rechteckigen Quaders ist, der eine in Längsrichtung abgerundete Fläche (12a) mit geringerer Breite aufweist, wobei ein Abschnitt eines jeden Gurts (6) um den Mittelstift (12) um die abgerundete Fläche (12a) herum verläuft, und dabei die gegenüberliegende Längsfläche geringerer Breite für jede der beiden Aussparungen (11) die ihm zugeordnet sind, freilässt, wobei jeder Gurt (6) zwei freie Enden aufweist, die jeweils ein Steck- (7m) oder Aufnahmemittel (7f) zum Einklinken tragen.

13. Vorrichtung (1) nach dem vorstehenden Anspruch, wobei jeder Gurt (6) einen Zwischengurtverlauf aufweist, der zum anderen Gurt (6) im Bereich der Einklinkmittel (7m, 7f) ausgerichtet ist, die dazu bestimmt sind, sich im Bereich der Brust des Benutzers zu befinden, wobei die beiden Zwischengurtverläufe ein freies Ende mit ergänzenden Einklinkmitteln für deren feste Verbindung aufweisen.

14. Vorrichtung (1) nach einem der vorstehenden Ansprüche, wobei die elektronischen Mittel in der Form einer Karte mit gedruckter Leiterplatte (15) sind, wobei die Vorrichtung (1) ein oder mehrere Systeme aufweist, die eine oder mehrere der folgenden Funktionen erfüllen: eine Navigations- und lokale Geopositionierungsfunktion, eine Verknüpfungsfunktion mit einem Handytelefon, das eine geeignete geladene App aufweist, eine elektronische Schlüsselfunktion, die einen Start der Fortbewegungsmaschine verriegelt, wenn die Signalisierungsvorrichtung (1) um einen vorbestimmten Abstand von der Fortbewegungsmaschine entfernt ist, oder diese freigibt, wenn sie näher als der vorbestimmte Abstand an der Fortbewegungsmaschine ist.

15. Einheit aus einer Fortbewegungsmaschine und einer Signalisierungsvorrichtung (1), die auf dem Rücken eines Benutzers der Fortbewegungsmaschine getragen wird, **dadurch gekennzeichnet, dass** die Signalisierungsvorrichtung (1) nach einem der vorstehenden Ansprüche ist, wobei ein Sender (2) der Vorrichtung (1) in der Fortbewegungsmaschine aufgenommen ist, oder sich in der Nähe der Fortbewegungsmaschine befindet.

## Claims

1. Signaling device (1) intended to be placed removably on the back of a user of a locomotive machine, the back remaining visible in an environment of the machine in motion, the device (1) comprising firstly a transmitter (2) intended to be connected to at least one primary signaling device of the machine indicating a right-hand or left-hand lateral direction that the machine is taking in motion, and secondly a receiver connected to at least one secondary signaling light (3d, 3g) integrated in the signaling device (1), said receiver being able to receive a signal transmitted by said transmitter (2), the device (1) comprising electronic means for processing the signal and controlling the switching on and/or off of said at least one secondary signaling device (3d, 3g) synchronously with the switching on and/or off of said at least one primary signaling light, the electronic means including an accelerometer and means for interpreting the measurements of the accelerometer making it possible to detect a right or left lateral variation in direction of movement, **characterized in that** the means controlling said at least one secondary signaling light (3d, 3g) comprise means for checking that said at least one secondary signaling light (3d, 3g) is indeed indicating the right or left lateral direction followed by the user and the machine.

2. Device (1) according to claim 1, wherein the electronic means comprise means for the automatic reversal of said at least one secondary signaling light (3d, 3g) when the checking means determine that said at least one secondary signaling light (3d, 3g) is not indicating the right or left lateral direction followed by the machine, so that said at least one secondary signaling light (3d, 3g) correctly indicates the right or left lateral direction followed by the user and the machine or the electronic means comprise information means intended for the user that the right or left lateral direction indicated by said at least one secondary signaling light (3d, 3g) is incorrect.

3. Device (1) according to claim 1 or 2, wherein the transmitter (2) is connected to a circuit controlling two right and left primary direction indicator lights of the machine and said at least one secondary signaling light (3d, 3g) comprises two right and left secondary direction indicator lights (3d, 3g), the checking means detecting whether a secondary direction indicator light (3d, 3g) is or is not in operation according to the electrical supply thereof.

4. Device (1) according to the preceding claim, wherein the transmitter (2) is also connected to a circuit controlling at least one auxiliary primary signaling light of the machine and the device (1) also comprises at least one auxiliary secondary signaling light (4), said at least one auxiliary primary and secondary signaling light (4) being taken singly or in combination from among a stop light indicating braking, a tail light, a fog light or a hazard warning light.

5. Device (1) according to either one of the preceding two claims, wherein the transmitter (2) has a current detector in the or each control circuit associated with the or a primary signaling light or the information on switching on of a primary signaling light is transmitted by wire connection to the transmitter (2).

6. Device (1) according to the preceding claim, wherein the transmitter (2) comprises a dedicated battery, rechargeable by induction, by microcable via a USB socket or by cable connected to a battery of the locomotive machine, a visual and/or audible indicator present on the device (1) informing of a low dedicated-battery charge for the transmitter (2).

7. Device (1) according to any one of the preceding claims, wherein said at least one secondary signaling light (3d, 3g) is in the form of a lamp or light emitting diodes (18), a light intensity of which is variable according to external brightness.

8. Device (1) according to the preceding claim, which comprises means for the radar detection of another locomotive machine in the vicinity of the locomotive machine for which the device (1) is intended with estimation of a distance separating the other machine from the device (1) and, when this distance is less than a predetermined minimum safety distance between the two machines stored in memory means provided in the electronic means, the means controlling said at least one secondary signaling light (3d, 3g) switch on said at least one signaling light with recognizable specific intensity and/or periodicity in order to indicate that the predetermined minimum safety distance between the two machines is not complied with.

9. Device (1) according to any one of the preceding claims, wherein a hollow shell (5) in two portions (5a, 5b) secured together removably delimits a closed internal space sealingly housing said at least one secondary signaling light (3d, 3g), the electronic means and at least one electrical supply source (8) for the electronic means and for the receiver, the device (1) comprising at least one adjustable strap (6) passing through the shell (5) and winding around the body of the user, while having quick attachment means (7m, 7f) by snapping in.

10. Device (1) according to the preceding claim, wherein the shell (5) comprises a first shell portion (5a) forming a cover and a second shell portion (5b) forming a receptacle for the electronic means and for said at least one electrical supply source (8), the second shell portion (5b) being intended to be facing the back of the user, the first (5a) and second (5b) portions of a shell (5) fitting one in the other with the first shell portion (5a) having an opposite face furthest away from the second portion (5b) in the fitted-together position of the first (5a) and second (5b) portions of a shell (5) with transparent zones (9) facing said at least one secondary signaling light (3d, 3g) housed inside the shell, the shell (5) being provided externally with at least two adjustable straps intended to attach the shell (5) to the back of the user.

11. Device (1) according to claim 10, wherein either the second shell portion (5b) is intended to rest against a portion of the back of the user, the second shell portion (5b) or the entire shell (5) with the first (5a) and second (5b) shell portions thereof having four passage recesses (11) matched in pairs for passage of a strap portion (6) of one of said at least two adjustable straps (6), or a shell support (10) is interposed between the second portion (5b) and the back of the user, the shell support (10) having a bearing face intended to rest against a portion of the back of the user with, on a face of the shell support (10) opposite to the face matching a portion of the back, quick attachment means (13) of the self-adhesive strip type with the second shell portion (5b), the shell support (10) projecting beyond the shell (5) when the shell (5) is superimposed on the shell support (10) by at least four branches (11a), each branch (11a) having a passage recess (11) for a strap portion (6) of one of said at least two adjustable straps (6), the branches (11a) and the passage recess (11) thereof being laterally matched in pairs.

12. Device (1) according to the preceding claim, wherein each strap (6) is adjusted so as to be intended to pass around a respective shoulder of the user while passing under the arm of the user, each passage recess (11) having a median stud (12) lying at the middle and in the length of the recess (11) and being in the form of a right-angled parallelepiped having a narrower longitudinal rounded face (12a), a portion of each strap (6) passing around the median stud (12) around the rounded face (12a) while leaving free the opposite narrower longitudinal face for each of the two recesses (11) that are associated therewith, each strap (6) having two free ends respectively carrying a male (7m) or female (7f) snapping-in means.

13. Device (1) according to the preceding claim, wherein each strap (6) has an intermediate strap portion oriented towards the other strap (6) at the snapping-in means (7m, 7f) intended to be situated on the chest of the user, the two intermediate strap portions having a free end with complementary snapping-in means for securing thereof.

14. Device (1) according to any one of the preceding claims, wherein the electronic means are in the form of a printed circuit card (15), the device (1) having one or more systems fulfilling one or more of the following functions: a navigation and local geopositioning function, a function of connection with a cellphone that has downloaded a suitable application, an electronic key function locking starting of the locomotive machine when the signaling device (1) is distant by a predetermined distance from the locomotive machine and unlocking it when it is closer to the locomotive machine than the predetermined distance.

15. Assembly consisting of a locomotive machine and a signaling device (1) carried on the back of a user of the locomotive machine, **characterized in that** the signaling device is in accordance with any one of the preceding claims, a transmitter (2) of the device (1) being housed in the locomotive machine or being situated in the vicinity of the locomotive machine.
